# EUROPEAN PATENT APPLICATION

(11) **EP 4 343 249 A1**
(43) Date of publication of application: **27.03.2024**
(21) Application number: 22943274.5
(22) Date of filing: 06.06.2022
(51) Int. Cl.: F27D 5/00

(54) **SAGGAR AND ELECTRODE MATERIAL PRODUCTION DEVICE HAVING SAME**

(30) Priority: 23.05.2022 CN 202221227432 U
(71) Applicant: Tianjin B&M Science And Technology Co., Ltd., Tianjin 300384 (CN)
(72) Inventor: QIN, Jin, Tianjin 300384 (CN); CHENG, Xiaokun, Tianjin 300384 (CN); LI, Longqing, Tianjin 300384 (CN); XU, Ning, Tianjin 300384 (CN); WU, Mengtao, Tianjin 300384 (CN)
(74) Representative: Ström & Gulliksson AB
(86) International application number: PCT/CN2022/097074
(87) International publication number: WO 2023/226078

(57) **Abstract**

A saggar and an electrode material production device having same. The saggar comprises: a saggar body (10) having an accommodating cavity (11) and an opening, the accommodating cavity (11) being in communication with the opening, the bottom surface of the accommodating cavity (11) being provided corresponding to the opening, and the accommodating cavity (11) being configured to accommodate materials; and protruding portions (20), the protruding portions (20) being arranged on the bottom surface of the accommodating cavity (11), the protruding portions (20) and a side wall of the accommodating cavity (11) dividing the accommodating cavity (11) into a plurality of mutually independent divided regions (111), and the protruding portions (20) being lower than the materials. The bottoms of the materials are separated by the protruding portions (20), such that the bottoms of the materials do not adhere to each other after roasting is completed; thus, damage to the materials can be prevented when the materials are separated, thereby reducing the reject rate and decreasing material waste; in addition, the protruding portions (20) are lower than the materials, so that after a cutter cuts the materials, gaps are reserved between the materials, and thus gas generated during a roasting process of the materials is discharged to the outside along the gaps.

## Description

This application claims priority to Chinese Patent Application No. 202221227432.2, titled "SAGGER AND DEVICE COMPRISING SAME FOR PRODUCING ELECTRODE MATERIAL", filed on May 23, 2022 with the China National Intellectual Property Administration, which is incorporated herein by reference in its entirety.

### FIELD

The present application relates to the technical field of saggers, and in particular to a sagger and a device comprising same for producing electrode material.

### BACKGROUND

In the prior art, in a flow of processing powder materials such as electrode materials, it is sometimes necessary to place a material in a chamber of a sagger, and place the sagger in a sintering kiln to sinter the material. After sintering, the material is agglomerated. In addition, before sintering the material, the material in the sagger is generally divided into a plurality of pieces by using a cutting knife, to ensure that the size of a block structure formed after the material is sintered meets a certain standard. However, the bottom surface of a chamber of a conventional sagger is flat. When the cutting knife cuts the material in the chamber downward, the material is compressed downward, and the material near the bottom surface of the chamber is difficult to be completely cut. In this case, after the material is sintered, the bottoms of two adjacent pieces of material can stick together, causing the bottom of the material to be easily damaged when the material is separated, resulting in the size of the block structure of the material not meeting requirements for use.

### SUMMARY

Based on this case, a sagger and a device comprising the same for producing electrode materials are provided to solve the problem that the bottoms of block materials stick to each other after materials are sintered in the sagger.

An aspect of the present application provides a sagger, comprising a sagger bulk having a chamber and an opening, wherein the chamber is connected with the opening, a bottom surface of the chamber is arranged corresponding to the opening, and the chamber is configured to accommodate a material; a protruding portion, arranged on the bottom surface of the chamber, wherein the protruding portion divides the chamber into a plurality of independent separate areas, and a height of the protruding portion is lower than that of the material.

In an embodiment, the protruding portion comprises at least one protruding unit, and the separate area is enclosed by a plurality of protruding units connected end to end or enclosed by at least one protruding unit and an inner wall of the chamber, a side surface of a side close to the opening of the protruding unit is an arc surface, and a middle part of the arc surface is arranged close to the opening.

In an embodiment, a cross section of the protruding unit in the vertical direction is an arc surface.

In an embodiment, a transition surface is provided at a joint between the bottom surface of the chamber and a side wall of the chamber.

In an embodiment, the protruding portion is integrated with the sagger bulk.

In an embodiment, a lower surface of the sagger bulk is provided with a groove, an upper surface of the sagger bulk is provided with a snap-on protrusion, a plurality of sagger bulks are provided, and arranged in an array in the horizontal direction and stacked in the vertical direction, and for two adjacent sagger bulks in the vertical direction, the snap-on protrusion of a lower sagger bulk is inserted into the groove of an upper sagger bulk.

In an embodiment, the sagger further comprises a separating plate, which is located in the chamber, and divides the chamber into a plurality of separate accommodation areas, and a height of the separating plate is higher than that of the material.

In an embodiment, the sagger further comprises a spacer protrusion, which is arranged on an outer wall of the sagger bulk.

In an embodiment, a gas circulation channel is provided on the side wall of the sagger bulk and connected with the chamber, the gas circulation channel is formed by an inward depression of an upper surface of the sagger bulk, and the opening is arranged on the upper surface of the sagger bulk.

Another aspect of the present application provides a device for producing electrode material, comprising a dividing knife and the above-mentioned sagger, wherein a cross-sectional shape of the dividing knife in the horizontal direction is the same as that of the protruding portion in the horizontal direction, and the dividing knife is movably arranged above the opening, and arranged corresponding to the protruding portion.

In the above technical solution, the sagger bulk comprises a chamber and an opening. A protruding portion is provided on the bottom surface of the chamber. The protruding portion and a side wall of the chamber divide the chamber into a plurality of independent separate areas. A height of the protruding portion is lower than that of the material. During an actual operation, the cutting knife is corresponded to the protruding portion, and the cutting knife cuts the material in the chamber downward from the opening. The material in the chamber is divided into multiple pieces, and the protruding portion corresponds to a gap between each piece of material. With the above technical solution, the protruding portion separates the bottom of each piece of material, so that the bottom of each piece of material will not stick to each other after the sintering is completed, thereby avoiding damaging the material when separating each piece of material, thereby reducing the scrap rate and material waste. In addition, the height of the protruding portion is lower than that of the material, so that after the material is cut with the cutting knife, a gap remains between each piece of material, so that the gas generated during the process of sintering the material can be discharged to the outside along the gap.

### BRIEF DESCRIPTION OF THE DRAWINGS

FIG. 1 is a schematic diagram of an overall structure of a sagger according to an embodiment of the present application;
FIG. 2 is a cross-sectional view of a sagger according to an embodiment of the present application.

The numeral references in figures:
10 sagger bulk; 11 chamber; 111 separate area; 112 accommodation area; 113 transition surface; 14 snap-on protrusion; 20 protruding portion; 21 protruding unit; 30 separating plate; 40 spacer protrusion; 50 gas circulation channel.

### DETAILED DESCRIPTION OF EMBODIMENTS

In order to make the above-mentioned purpose, features and advantages of the present application more obvious and understandable, the specific embodiments of the present application will be described in detail below in conjunction with the drawings. In the following description, numerous specific details are set forth in order to provide a thorough understanding of the present application. However, the present application can be implemented in many other ways different from those described here, and those skilled in the art can make similar improvements without departing from the essence of the present application, therefore the present application is not limited by the specific examples disclosed below.

In the description of the present application, it should be understood that the terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial" , "radial", "circumferential" and other indicated orientations or positional relationships are based on the orientations or positional relationships shown in the drawings, and are only for the convenience of describing the present application and simplifying the description, rather than indicating or implying that the referred device or elements must have a specific orientation, or be constructed and operated in a specific orientation, which thus are not to be construed as limitations on the present application.

In addition, the terms "first" and "second" are only used for descriptive purposes, and should not be interpreted as indicating or implying relative importance or implicitly specifying the quantity of the indicated technical features. Therefore, features defined as "first" and "second" may explicitly or implicitly comprise at least one of these features. In the description of the present application, "a plurality of" means at least two, such as two, three, and the like, unless otherwise expressly and specifically limited.

In the present application, terms such as "installation", "in connection with", "connection" and "fixation" should be interpreted in a broad sense. For example, it can be fixed connection or detachable connection, or integration; it may be mechanical connection or electrical connection; it may be direct connection or indirect connection through an intermediary medium, and it may be internal connectionof two components or an interaction relationship between two components, unless expressly specified. For those of ordinary skilled in the art, the specific meanings of the above terms in the present application can be understood according to specific circumstances.

In the present application, unless expressly specified and limited, a first feature being "on" or "below" a second feature may indicate that the first feature and the second feature are in direct contact, or the first feature and second feature are in indirect contact through an intermediary medium. Furthermore, the first feature being "above", "over" or "on" the second feature may indicate that the first feature is directly above or diagonally above the second feature, or simply indicate that the first feature is higher in level than the second feature. The first feature being "below", "beneath" or "under" the second feature may indicate that the first feature is directly below or diagonally below the second feature, or simply indicate that the first feature is lower in level than the second feature.

It should be noted that when an element is referred to as being "fixed on" or "configured on" another element, it may be directly on the other element or there may be an intervening element. When an element is said to be "connected" to another element, it can be directly connected to the other element or there may also be an intervening element. As used herein, the terms "vertical", "horizontal", "upper", "lower", "left", "right" and similar expressions are for the purpose of illustration only and are not intended to represent the only implementation.

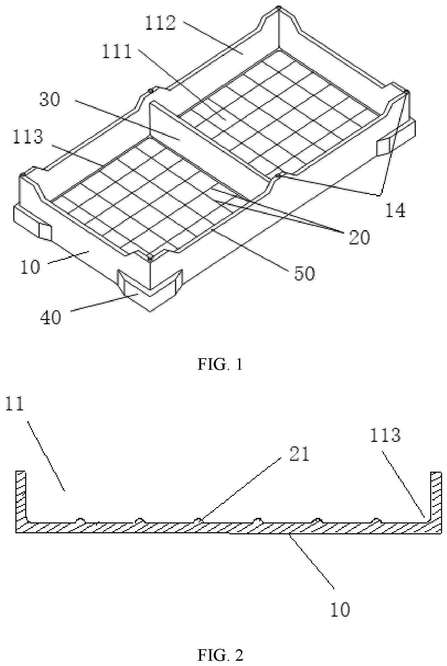

Referring to FIG. 1, a sagger is provided in an embodiment of the present application. The sagger comprises a sagger bulk 10 and a protruding portion 20. The sagger bulk 10 comprises a chamber 11 and an opening. The chamber 11 is connected with the opening, a bottom surface of the chamber 11 is arranged corresponding to the opening, and the chamber 11 is configured to accommodate a material. The protruding portion 20 is located on the bottom surface of the chamber 11, which divides the chamber 11 into a plurality of independent separate areas 111, and a height of the protruding portion 20 is lower than that of the material. With the above-mentioned structure, the protruding portion 20 corresponds to a cutting knife for cutting the material, that is, when the cutting knife divides the material in the chamber 11 into multiple pieces, each piece of the material is located in the separate area 111, and the protruding portion 20 corresponds to a gap between each piece of the materialthat the bottom of each piece of the material is in a separated state which prevents the bottom of each piece of the material from sticking to each other after the sintering is completed, thereby avoiding the damage of the bottom of the material when separating the material. In particular, the height of the protruding portion 20 is generally 2% to 50% of the height of the material. Since a sum of the height of the protruding portion 20 and the height of the gap between each piece of the material is the same as the height of the material, such configuration can make the height of the gap between each piece of the material large enough, so that the gas generated during sintering the material can be quickly discharged to the outside. The shapes of the separate areas 111 can be the same, partially the same, or different.

In actual operation, the material is compressed under a force, and a thin layer of the material on a side surface of the protruding portion 20 close to the opening is difficult to be cut by the cutting knife. Therefore, after the sintering is completed, adjacent two pieces of the material tend to stick to each other on an upper surface of the protruding portion 20. However, the sticking part is in the middle of the side surface of the block material, and the material is not easy to be damaged when separating the material. The use of the above structure reduces the defective rate and the waste of raw materials.

Referring to FIG. 1 and FIG. 2, in an embodiment, the protruding portion 20 comprises at least one protruding unit 21, and the separate area 111 is enclosed by a plurality of protruding units 21 connected end to end or enclosed by at least one protruding unit 21 and an inner wall of the chamber 11. The protruding unit 21 can be arranged in parallel, and two ends of the protruding unit 21 are connected to the inner wall of the chamber 11 respectively. The protruding unit 21 can further be arranged crosswise to form a network structure. The protruding unit 21 can be a strip-shaped structure, an arc-shaped structure or an irregular-shaped structure, and the like. A side surface of the protruding unit 21 close to the opening is an arc surface, and the middle part of the arc surface is arranged close to the opening. Such configuration enables the material to be separated from the protruding portion 20 easily when the material sintered falls off from the sagger bulk 10, thereby avoiding the damage of the block material or the protruding portion 20. Moreover, when cutting with the cutting knife, the cutting knife squeezes against the highest point of the arc surface, so that the material above the protuding unit 21 is easy to be completely separated by the cutting knife, thereby reducing the probability of two adjacent pieces of the material sticking to each other, thereby reducing the defective rate of materials.

Referring to FIG. 2, in an embodiment, the cross section of the protruding unit 21 in the vertical direction is an arc surface. Such configuration facilitates the processing of the protruding unit 21.

In another embodiment, a transition structure is provided on both side surfaces of the protruding unit 21 close to the opening. The side surface of the protruding unit 21 close to the opening can be flat. The transition structure can be a chamfer or a fillet. Such configuration can further enable the material to be separated from the protruding portion 20 easily when the material sintered falls off from the sagger bulk 10, thereby avoiding the damage of the block material or the protruding portion 20.

Referring to FIG. 2, in an embodiment, a transition surface 113 is provided at a joint between the bottom surface of the chamber 11 and a side wall of the chamber 11. The transition surface 113 can be an arc surface or an inclined surface. The transition surface 113 is provided to facilitate the separation of the material from the sagger bulk 10 after the sintering is completed, which avoids the remaining of the material at the joint between the bottom surface of the chamber 11 and the side wall of the chamber 11 when the material and the sagger bulk 10 are separated, thereby avoiding the damage of the block material.

In an embodiment, the protruding portion 20 is integrated with the sagger bulk 10. In this case, there is no gap between the protruding portion 20 and the sagger bulk 10. After the material is placed in the chamber 11 and sintered, the material can be completely cleaned out from the chamber 11, which facilitates the cleaning of the sagger bulk 10.

Referring to FIG. 1, in an embodiment, a lower surface of the sagger bulk 10 is provided with a groove, and a upper surface of the sagger bulk 10 is provided with a snap-on protrusion 14. A plurality of the sagger bulks 10 are provided and arranged in an array in the horizontal direction and stacked in the vertical direction. For two adjacent sagger bulks 10 in the vertical direction, the snap-on protrusion 14 of the lower sagger bulk 10 is inserted into the groove of the upper sagger bulk 10. In a sintering kiln, a plurality of the sagger bulks 10 are arranged in an array in the horizontal direction and stacked in the vertical direction. With the above structure, two adjacent sagger bulks 10 among a plurality of the sagger bulks 10 arranged in the vertical direction can be snap-connected with together, thereby avoiding the skewing of the sagger bulks 10, making it convenient to place the sagger bulks 10, and improving the space utilization rate in the sintering kiln.

Referring to FIG. 1, in an embodiment, the sagger bulk further comprises a separating plate 30. The separating plate 30 is configured in the chamber 11 and divides the chamber 11 into a plurality of mutually separate accommodation areas 112. A height of the separating plate 30 is higher than that of the material. With the above structure, a volume of the chamber 11 of the sagger bulk 10 can be increased, so that a same amount of the material can be sintered with fewer saggers placed in the sintering kiln, which reduces the difficulty of placing the saggers in the sintering kiln, and saves the cost of producing the sagger.

Referring to FIG. 1, in an embodiment, the sagger further comprises a spacer protrusion 40, which is configured on an outer wall of the sagger bulk 10. Among a plurality of the sagger bulks 10 arranged in the sintering kiln, a gap needs to be provided between the sagger bulks 10 in the same horizontal direction so that the gas generated during sintering the materials can be discharged to the outside along the gap. The spacer protrusion 40 is configured so that a gap can be provided between adjacent sagger bulks 10 in the horizontal direction. The spacer protrusion 40 can be block-shaped or rod-shaped, and there can be a plurality of spacer protrusions 40. The sagger bulk 10 can be square. At least one spacer protrusion can be provided on two adjacent outer surfaces of the sagger bulk 10, or can be provided on each outer surface of the sagger bulk 10.

Referring to FIG. 1, in an embodiment, a gas circulation channel 50 is provided on a side wall of the sagger bulk 10, and the gas circulation channel 50 is connected with the chamber 11. The gas generated during sintering the material in the chamber 11 is discharged along the gas circulation channel 50 and then discharged along the gap between the sagger bulks 10. The gas circulation channel 50 is formed by an inward depression of the upper surface of the sagger bulk 10, and an opening is provided on the upper surface of the sagger bulk 10. With such configuration, the gas circulation channel 50 can be located on the upper part of the chamber 11, thereby increasing the accommodation space of the chamber 11.

An embodiment of the present application further provides a device for producing electrode material, comprising a dividing knife and the above sagger. A cross-sectional shape of the dividing knife in the horizontal direction is the same as that of the protruding portion 20 in the horizontal direction. The dividing knife is movably arranged above the opening, and corresponding to the protruding portion 20. The dividing knife is configured to cut the material in the chamber 11 so that the material is cut into blocks, and there is a gap between each block of the material, leading to a good uniformity of sintering the material. The dividing knife can move in the vertical direction between the above of the opening and the bottom surface of the chamber 11. When the dividing knife moves toward the chamber 11, the material is divided. In actual operation, the device further comprises a driving part and an operating table. The driving part is drivingly connected to the dividing knife. The sagger is placed on the operating table. The driving part drives the dividing knife to move toward the chamber 11 to divide the material in the chamber 11. It should be noted that the cross-sectional shape of the dividing knife in the horizontal direction is the same as that of the protruding portion 20 in the horizontal direction, but there may be a small difference in the structural size of the protruding portion 20 and the dividing knife. The sagger and the device for producing electrode material provided by this technical solution are mainly configured to produce positive electrode material.

The technical features of the above-mentioned embodiments can be combined arbitrarily. To make the description concise, not all possible combinations of the technical features in the above-mentioned embodiments are described. However, as long as there is no contradiction in the combination of these technical features, all should be considered to be within the scope of the present application.

The above-mentioned embodiments only express several implementation modes of the present application, and the description thereof is relatively specific and detailed, but it should not be construed as limiting the scope of the present application. It should be noted that those of ordinary skill in the art can make several modifications and improvements without departing from the concept of the present application, and these all belong to the protection scope of the present application. Therefore, the protection scope of the present application should be determined by the appended claims.

## Claims

1. A sagger, comprising:
a sagger bulk (10), having a chamber (11) and an opening, wherein the chamber (11) is connected with the opening, a bottom surface of the chamber (11) is arranged corresponding to the opening, and the chamber (11) is configured to accommodate a material;
a protruding portion (20), arranged on the bottom surface of the chamber (11), wherein the protruding portion (20) divides the chamber (11) into a plurality of independent separate areas (111), and a height of the protruding portion (20) is lower than that of the material.

2. The sagger according to claim 1, wherein the protruding portion (20) comprises at least one protruding unit (21), and the separate area (111) is enclosed by a plurality of protruding units (21) connected end to end or enclosed by at least one protruding unit (21) and an inner wall of the chamber (11), a side surface of a side of the protruding unit close to the opening of the protruding unit (21) is an arc surface, and a middle part of the arc surface is arranged close to the opening.

3. The sagger according to claim 2, wherein a cross section of the protruding unit (21) in the vertical direction is an arc surface.

4. The sagger according to claim 1, wherein a transition surface (113) is provided at a joint between the bottom surface of the chamber (11) and a side wall of the chamber (11).

5. The sagger according to claim 1, wherein the protruding portion (20) is integrated with the sagger bulk (10).

6. The sagger according to claim 1, wherein a lower surface of the sagger bulk (10) is provided with a groove, an upper surface of the sagger bulk (10) is provided with a snap-on protrusion (14), a plurality of sagger bulks (10) are provided, and arranged in an array in the horizontal direction and stacked in the vertical direction, and for two adjacent sagger bulks (10) in the vertical direction, the snap-on protrusion (14) of a lower sagger bulk (10) is inserted into the groove of an upper sagger bulk (10).

7. The sagger according to claim 1, wherein the sagger further comprises a separating plate (30), which is located in the chamber (11), and divides the chamber (11) into a plurality of separate accommodation areas (112), and a height of the separating plate (30) is higher than that of the material.

8. The sagger according to claim 1, wherein the sagger further comprises a spacer protrusion (40), which is arranged on an outer wall of the sagger bulk (10).

9. The sagger according to claim 1, wherein a gas circulation channel (50) is provided on a side wall of the sagger bulk (10) and connected with the chamber (11), the gas circulation channel (50) is formed by an inward depression of an upper surface of the sagger bulk (10), and the opening is arranged on the upper surface of the sagger bulk (10).

10. A device for producing electrode material, comprising:
a dividing knife and the sagger according to any one of claims 1 to 9, wherein a cross-sectional shape of the dividing knife in the horizontal direction is the same as that of the protruding portion (20) in the horizontal direction, and the dividing knife is movably arranged above the opening, and arranged corresponding to the protruding portion (20).
